# EUROPEAN PATENT SPECIFICATION

(11) **EP 0 896 794 B1**
(45) Date of publication and mention of the grant of the patent: **29.10.2003**
(21) Application number: 98111620.5
(22) Date of filing: 24.06.1998
(51) Int. Cl.: A23F 5/04, A23N 12/08

(54) **Method and apparatus for roasting and cooling beans**
Verfahren und Vorrichtung zum Rösten und Kühlen von Bohnen
Procédé et installation de torréfaction et de refroidissement de fèves

(30) Priority: 25.06.1997 JP 18439097
(43) Date of publication of application: 17.02.1999
(73) Proprietor: MAYEKAWA MFG CO.LTD., Koto-ku Tokyo 135 (JP)
(72) Inventor: Shinkawa, Kiichiro, UCC Ueshima Coffee Co., Ltd., Kobe-shi, Hyogo (JP); Nakagiri, Osamu, UCC Ueshima Coffee Co., Ltd., Kobe-shi, Hyogo (JP); Katsuragi, Yasutaka, Mayekawa Mfg. Co. Ltd., Koto-ku, Tokyo (JP); Asami, Hisataka, Mayekawa Mfg. Co. Ltd., Koto-ku, Tokyo (JP)
(74) Representative: Strehl Schübel-Hopf & Partner

(56) References cited:
- US-A- 3 189 460
- US-A- 3 332 780
- US-A- 3 821 450
- US-A- 5 257 574
- DATABASE WPI Section Ch, Week 7809 Derwent Publications Ltd., London, GB; Class D14, AN 78-16831A XP002080828 & JP 53 006268 A (KONDO UNYU KIKO KK) , 20 January 1978

## Description

### BACKGROUND OF THE INVENTION

### Field of the Invention

The present invention relates to a method and an apparatus for roasting and cooling beans at low cost, in which particular considerations are given to a cooling step right after roasting such as to obtain high level aroma and flavor of roasted coffee beans.

### Description of the Prior Art

Conventional roasted coffee beans manufacture comprises a roasting step of beans and a cooling step right thereafter.

In the above roasting step, coffee beans is roasted with hot air at 400 to 500°C in a hot air drum roaster for about 10 minutes to obtain roasted coffee beans at about 200°C.

In the subsequent cooling step, the coffee beans right after the roasting are cooled down by air cooling for about 5 minutes to normal temperature of about 20°C.

The flavor of coffee which is obtained in the above roasting and cooling steps is attributable to many chemical components that are generated in the beans by the roasting.
a) However, the flavor is changed with dispersion of and chemical changes in components with the lapse of time after the roasting.
b) In addition, the remaining heat right after the roasting may cause dispersion of aroma components or progress of secondary roasting, giving rise to roasting unevenness.
c) Furthermore, while fresh coffee has rich aroma and great swelling of its flour is caused by pouring hot water into the flour of coffee at the time of the dripping, old coffee less swells at the time of the dripping and has a poor aroma.

The swelling of coffee at the time of the dripping is presumed to be owing to carbonic acid gas contained in the roasted coffee beans. As the roasted coffee beans become older, carbonic acid gas progressively disperses together with aroma components, and the carbonic acid gas content in roasted coffee beans represents the degree of aroma.

As shown above, the aroma and flavor of coffee are attributable to dispersion of aroma components after the roasting and carbonic acid gas or chemical changes, and also remaining heat after the roasting poses problems. In consequence, it is thought that problems reside in the cooling treatment right after the roasting and also in custody subsequent to the cooling treatment.

In the conventional cooling treatment, a temperature of about 200°C right after the roasting is cooled down to normal temperature of 20°C by using an air-cooling apparatus.

Concerning such cooling apparatus, prior art A is disclosed in, for instance, Japanese Patent Publication No. 57-21372.

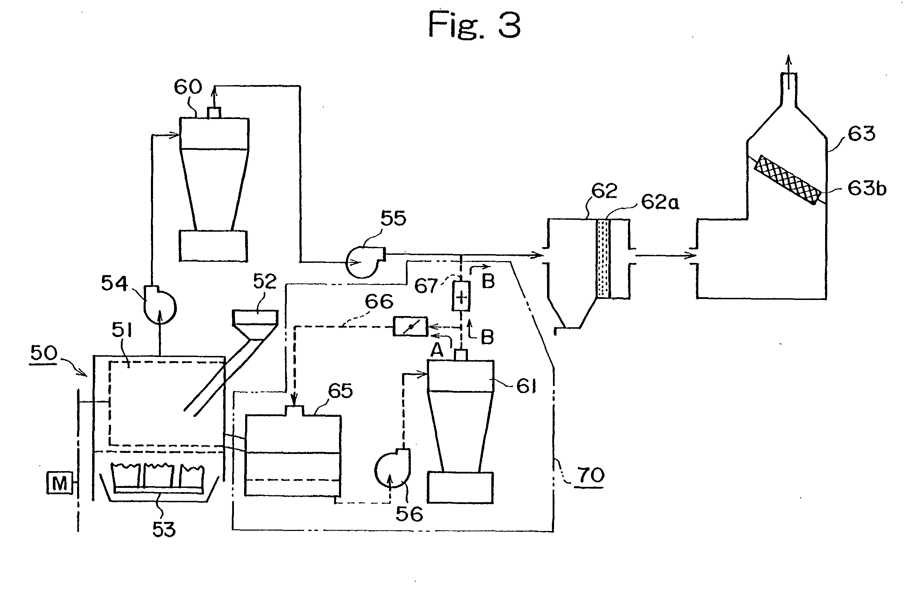

Fig. 3 shows the cooling apparatus 70 according to prior art A. Dashed line 66 represents a cold air circulation path, to which a cooling vessel 65, a fan 56 and a dust collector 61 are connected as shown by arrow A. Dashed line 67 represents an exhausting path, through which exhaust gas from a filtering type dust collector 62 having a filter 62a is released through a deodorizer 63 to atmosphere as shown by arrow B.

Exhaust gas withdrawn from the cooling vessel 65 is passed for dust removal through the dust remover 61, and then returned to the cooling vessel 65. This circulation loop is shown by dashed line 66. A portion of the exhaust gas circulated in the circulation loop 66 is led through the exhausting path represented by dashed line 67 so as to join a releasing path, through which dust removed exhaust gas being led via a fan 54, a centrifugal dust collector 60 and a fan 55 from a roasting chamber 51 is passed, thereby the joint exhaust gas is led to be released to the atmosphere after deodorizing in the deodorizer 63 through the filterizing type dust collector 62.

In this case, during cooling no roasting is made, and no exhaust gas comes out from the roasting chamber 51. Thus, it is made so as to be possible to employ a deodorizer having a capacity corresponding to the amount of exhaust gas from the roasting chamber, which is far less than the exhaust amount of cooling gas.

That is, according to prior art A the exhaust gas generated from the cooling vessel during cooling is re-circulated by removing dust, and the re-circulated exhaust gas, while doing dust removal, is deodorized and released to atmosphere at a low rate. In this case, during cooling it is necessary to deodorize a great amount of exhaust gas. To this end, a high capacity deodorizer is necessary, and invention A has been proposed as a means for solving this problem.

Concerning another example of cooling apparatus, prior art B is disclosed in Japanese Patent Publication No. 4-21465.

According to prior art B, an air cooling vessel is provided for cooling roasted beans right after roasting. In this cooling apparatus, for a short period of time right after the start of cooling, bad odor is produced, cooled exhaust gas from the cooling vessel is released to atmosphere after deodorizing through a deodorizer.

At a later time, the cooled exhaust gas is not deodorized but is directly released to the atmosphere.

In the former prior art case, the rate of flow of cooling air is held low, and it is permitted to deodorize the cooling exhaust gas by commonly using a low exhaust rate deodorizer which is also used for the exhaust gas from the roasting chamber in the roasting step. In the latter prior art case, in which no deodorizer is used, the rate of flow of cooling air is increased to promote cooling of roasted beans by cooling with high air flow rate and permit retaining the aroma.

More specifically, according to prior art B while ensuring sufficiently cooling an air flow rate to retain the aroma of the roasted beans, only part of the cooled exhaust gas that contains much bad odor in an initial stage after the start of the cooling is released to atmosphere by using the deodorizer, and the subsequent cooled exhaust gas is directly released to atmosphere.

Recently, it has further been in practice to blow fresh air from the outside into a cooling vessel so as to use more exhaust gas than three times the exhaust gas in the roasting step for air cooling of the roasted beans through a dust remover, in which exhaust gas is partly directly released to atmosphere and partly released to atmosphere through the deodorizer.

Concerning a further example of cooling apparatus, prior art C is disclosed in Japanese Patent Publication No. 7-110200.

Prior art C features quick cooling roasted coffee beans down to -17 to -35°C within 3.5 minutes after roasting and wrapping the cooled coffee beans in a gas-tight vessel without degassing any gas. The prior art thus has an object of preventing deterioration of the aroma of the roasted beans.

The degassing noted above has an aim of degassing carbonic acid gas by preserving the roasted coffee beans in a gas-tight silo for 120 hours to 4 days.

As a still further prior art, US-3,821,450 discloses a method for roasting and cooling coffee beans which uses two closed systems, one for roasting and one for cooling the beans. In the system used for roasting, hot air is circulated along a closed circuit while being heated when passing through a heat exchanger. For cooling, the air and the beans are discharged from one to the other closed system, wherein fresh, cool air or water are added and the mixture is blown into a cyclone where it cools down and heavy impurities such as stones etc. are removed.

US-3,332,780 and US-3,189,460 disclose methods where roasted coffee beans are cooled to ambient temperature by a spray of water and circulated air. In some examples described in these documents, the air is circulated in a closed circuit while passing through a heat exchanger where it is cooled by ordinary water. US-5,257,574 discloses a method of roasting coffee beans while controlling an amount of exhaust gas so as to maintain a predetermined pressure, followed by cooling the coffee beans in ambient air.

### SUMMARY OF THE INVENTION

It is an object of the invention to provide an apparatus and a method for roasting and cooling beans which improve the aroma components of the beans. This object is achieved by the method of claim 1 and the apparatus of claim 4. The subclaims are directed to preferred embodiments of the invention.

The invention suppresses dispersion of aroma and blocks discharge of gas containing aroma-components generated during cooling, to let aroma-containing gas be confined among the beans being cooled.

In the prior art techniques, various improvements are proposed concerning the promotion of cooling and removal of bad odor for roasting and cooling coffee beans. However, no measure against the following matters in the cooling step right after the roasting was provided.

That is, as above-mentioned, concerning the deterioration of the aroma and flavor of coffee, it is thought that a radical measure is necessary against the cooling treatment after the roasting in considerations of such problems as the dispersion of aroma components, the exhalation of gases and the progress of chemical change due to a great deal of cooled exhaust gas stream particularly in the cooling right after the roasting and also the problem of roasting unevenness resulting from remaining heat after the roasting.

The present invention was made in view of the above problems, and provides a method and an apparatus for roasting and cooling beans, which suppress as much as possible the dispersion of aroma components contained in roasted beans and exhalation of and chemical changes in gases in the step of cooling roasted beans executed right after the roasting, thereby providing coffee beans having an improved quality compared to the prior art product.

An embodiment of the present invention provides a method of roasting and cooling beans, wherein beans are deodorized only in a roasting step executed prior to the cooling of the roasted beans.

A further embodiment of the present invention provides an apparatus for roasting and cooling beans, which comprises cooling means of roasted beans and perching means of beans permitting suppression of the dispersion of aroma components and exhalation of gases.

A yet further embodiment of the present invention provides an apparatus for roasting and cooling beans, wherein deodorizing of beans during roasting and cooling beans is operated only in the roasting step.

According to a basic embodiment of the invention, a method of roasting and cooling beans is provided, which comprises the step of treatment for roasting and cooling beans, wherein perched beans are quickly cooled by causing circulation of cold air for cooling in a state isolated from external atmosphere, thereby suppressing dispersion of aroma and blocking discharge of gas containing aroma-components generated during cooling to the atmosphere to let the aroma-containing gas be confined in the beans being cooled.

Specifically, in the cooling method , the roasted beans are cooled in the isolated space with cold air circulated therein for cooling, whereby aroma components and gas containing these aroma components, generated during the cooling, are prevented from dispersion by exhalation and are confined in the roasted beans.

The cold air is low temperature cold air at 10°C or below, thus permitting reduction of cooling time and cooling air amount and minimizing generation of gas containing aroma components.

According to a preferred embodiment of the invention, a method of roasting and cooling beans is provided, which comprises the step of treatment of roasting and cooling beans, wherein beans are deodorizing only in a roasting step.

Specifically, commonly termed bad odor generated during cooling is not removed but is confined in the sealed space, in which cold air for cooling is circulated.

According to another embodiment, an apparatus for roasting and cooling beans is provided, which comprises roasting means including a roaster for thermally roasting beans, a dust remover for removing ash and dust in a roasting step and a deodorizer for deodorizing roasting exhaust gas after dust removal, and cooling means for cooling roasted beans, wherein the cooling means includes a cooling vessel, a cold air generator, a dust remover and a closed cold air circulation path connecting these components.

According to an embodiment, the deodorizer is operated only in a roasting step.

### BRIEF DESCRIPTION OF THE DRAWINGS

Fig. 1 is a block diagram outlining a roasting and cooling apparatus for carrying out a method of roasting and cooling beans according to the present invention.
Fig. 2 is a schematic view showing a test cooling apparatus designed on the basis of the roasting and cooling apparatus shown in Fig. 1.
Fig. 3 is a schematic view showing a prior art beans roasting and cooling apparatus.
Fig. 4 shows the test condition of typical example in the embodiment of the invention.

### DETAILED DESCRIPTION OF THE PREFERRED EMBODIMENT

An embodiment of the present invention will now be described together with an illustrated example. It is to be construed that unless particularly specified the sizes, shapes, relative positions and so forth of the components described in connection with the embodiment have no sense of limiting the scope of the present invention but are merely exemplary.

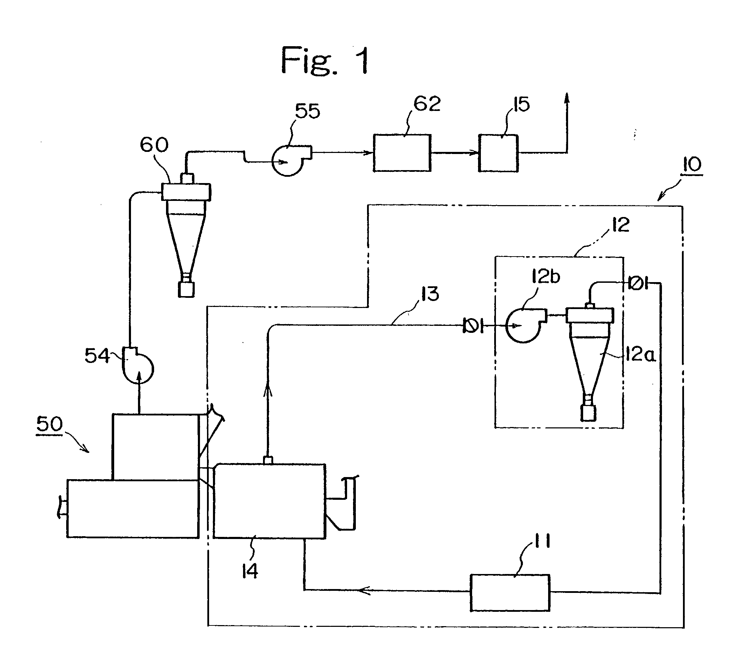

Fig. 1 is a block diagram outlining a roasting and cooling apparatus for carrying out a method of roasting and cooling beans according to the present invention.

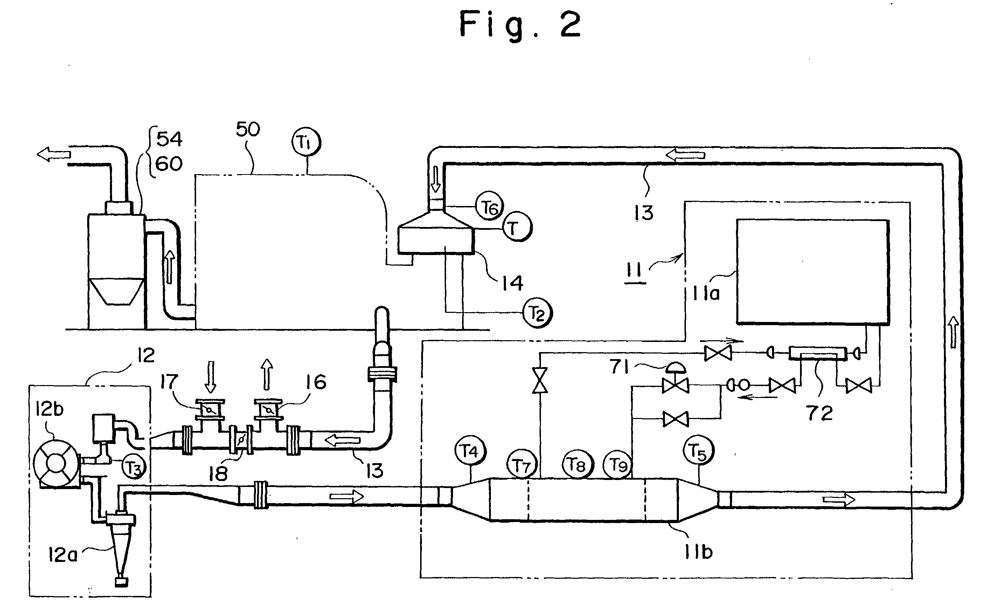

Fig. 2 is a schematic view showing a test apparatus designed on the bases of the cooling apparatus shown in Fig. 1.

In the method of roasting and cooling beans according to the present invention, deodorizing is operated only in a roasting step, and exhaust gas generated from a roasting chamber is released through a duct collector, a filter and a deodorizer to external atmosphere.

On the one hand, right after the roasting, the roasted beans are quickly cooled in a state being interposed in a sealed space, in which compressed cold air for cooling is circulated in the isolated state from external atmosphere. Thus, separation of aroma components and carbonic acid gas containing these components is minimized with reduction of cooling time and circulated air amount, and the aroma-containing gas is prevented from dispersion to the outside due to the sealed space and confined in the roasted beans.

At the time of the cooling, the cooling operation is made in the close sealed space including a cold air circulation path, and unlike the prior art deodorization etc. are not fully exhausted.

As shown in Fig. 1, the roasting and cooling apparatus for carrying out the method of roasting and cooling beans comprises a roasting unit, which includes a roaster 50, a fan 54 for withdrawing exhaust gas from the roaster 50, a centrifugal dust collector 60 for removing dust from the exhaust gas through the fan 54, a filtering type dust collector 62 for collecting dust in the dust removed exhaust gas through a fan 55 and a deodorizer 15 for deodorizing the exhaust gas after the dust collection, and a cooling unit 10.

The cooling unit 10 includes a cooling vessel 14, a dust collector unit 12 having a high pressure fan 12b and a dust collector 12a, a cold air generator 11 and a cold air circulation path 13 connecting together these components. A close sealed cooling space which does not use any conventional open type deodorizer, is formed by the gas-tight cooling vessel 14, dust collector unit 12, cold air generator 11 and cold air circulation path 13 connecting together these components.

Fig. 2 schematically shows a test cooling apparatus designed on the basis of the above cooling apparatus. As shown, the cold air generator 11 includes a condensing unit 11a and a heat exchanger 11b. Cold air is held at a temperature of substantially -18°C at the outlet of the heat exchanger 11b, and forced to ventilate under pressure by a cold air circulating fan provided on the inlet side of the heat exchanger 11b. The condensing unit 11a is a refrigerator, and the heat exchanger 11b is fin type heat exchanger. Cold air for cooling in the cold air circulation path 13 is forced out under high pressure by the dust collector unit 12.

In the cold air circulation path 13 of the test cooling apparatus shown in Fig. 2, an external exhausting valve 16, an atmospheric air in-taking valve 17 and an intermediate cut-off valve 18 are provided for judging the performance of various trial cooling system products.

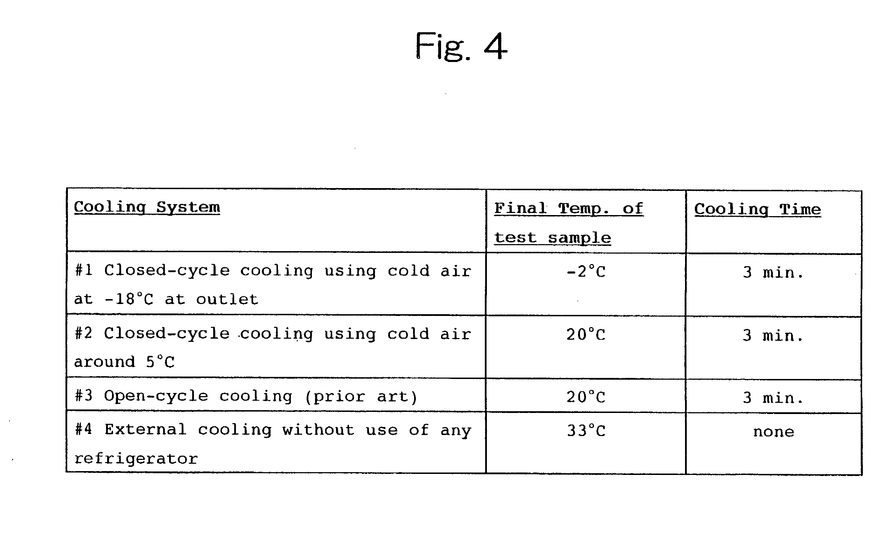

Using the above test cooling apparatus, various tests were made repeatedly, and the quality of roasted coffee beans samples was evaluated. It was found that the quality is extremely improved when the temperature of the circulated air is reduced to 10°C or below. Thus, in the embodiment of the invention, closed-cycle cooling should be made at a low temperature of 10°C or below. Fig. 4 shows results of four typical test examples of cooling.

Example #1 is closed-cycle cooling using cold air at an outlet in a temperature of -18°C.

Example #2 is closed-cycle cooling using cold air in a temperature of around 5°C.

Example #3 is open-cycle cooling (prior art).

Example #4 is external cooling without use of any refrigerator.

In Examples #1 and #2, satisfactory results could be obtained, and were quite superb compared to the results of the other test examples. This means that it is suitable to make closed-cycle cooling in a temperature of 10°C or below.

Thermometers T1; T; T2; T3; T4; T7; T8; T9; T5; T6 are provided respectively for temperature control of the test cooling apparatus in the roasting chamber 50, in the cooling vessel 14, at the outlet thereof, at the inlet of the fan 12b, at the inlet, center having three positions and outlet of the fin type heat exchanger 11b and at the inlet of the cooling vessel 14.

In the cooling unit 10, roasted beans right after the roasting are quickly cooled by low temperature cold air generated from the cold air generator 11 provided in the sealed space formed closely in the cold air circulation path 13. It is thus possible to suppress chemical changes in aroma components in the roasted beans, suppress generation of volatile components containing aroma components and eliminate roasting unevenness due to quick removal of remaining heat after the roasting.

Furthermore, since the roasted beans are cooled by a cold air stream circulated under high pressure in the sealed space, aroma components and carbonic acid and like gases containing the aroma components are prevented from dispersion and confined in the beans.

As shown in Fig. 1, the cooling unit 10 has no branch path from the cold air circulation path 13 to the filtering type dust collector 62 and deodorizer 15 in the roasting Unit. The deodorizer 15 is adapted to be used only in the roasting step, and this also contributes to running cost reduction.

The construction as described above permits holding particularly rich aroma components and flavor of roasted beans such as coffee beans, and contributes to running cost reduction owing to non-use of any deodorizer at the time of the cooling.

## Claims

1. A method for roasting and cooling beans, comprising the following steps:
roasting the beans, wherein roast exhaust gas is released through a dust collector, a filter and a deodorizer to the external atmosphere, and
quickly cooling the roasted beans isolated from the external atmosphere by circulation of cold air in a closed circuit including a cold air generator having a condensing unit (11a) and a heat exchanger (11b) for cooling the circulated air to a temperature of 10°C or below, thereby suppressing dispersion of aroma and blocking discharge of gas containing aroma components, generated during cooling, to the atmosphere.

2. The method of claim 1, wherein the deodorizer (15) is operated only during the roasting step but stopped when shifting to the cooling step.

3. The method of claim 1 or 2, wherein said circulated air is cooled to -18°C.

4. An apparatus for roasting and cooling beans, comprising:
a roaster (50) for roasting the beans with means for releasing roast exhaust gas through a dust collector, a filter and a deodorizer to the external atmosphere, and
a cooling apparatus (10) for cooling the roasted beans, comprising a cooling vessel (14), a cold air generator (11) and a closed circulation passage (13) to circulate cold air through the cooling vessel and the cold air generator in a closed circuit, wherein the cold air generator includes a condensing unit (11a) and a heat exchanger (11b) for cooling the circulated air to 10°C or below.

5. An apparatus according to claim 4, wherein the deodorizer (15) is operated only during operation of the roaster but stopped when operation of the cooling apparatus (10) to cool the roasted beans is started, and
wherein the cooling apparatus (10) comprises a dust collector (12) included through said circulation passage (13) in said closed circuit to collect dust from the circulated cold air.

6. An apparatus according to claim 4 or 5, wherein said cold air generator is provided for cooling the circulated air to -18°C.

## Patentansprüche

1. Verfahren zum Rösten und Kühlen von Bohnen, mit folgenden Schritten:
Rösten der Bohnen, wobei Röstabgas über einen Staubabscheider, einen Filter und einen Desodorisierer zur äußeren Atmosphäre abgelassen wird, und
schnelles Kühlen der gerösteten Bohnen unter Isolierung von der äußeren Atmosphäre durch Zirkulieren kalter Luft in einem geschlossenen Kreislauf, der einen Kaltlufterzeuger mit einer Kondensatoreinheit (11a) und einem Wärmetauscher (11b) enthält, um die zirkulierende Luft auf eine Temperatur von 10°C oder weniger zu kühlen, wodurch ein Zerstreuen des Aromas unterdrückt und ein Ablassen von Gas mit den Aromakömponenten, die während des Kühlens erzeugt werden, zur Atmosphäre gesperrt wird.

2. Verfahren nach Anspruch 1, wobei der Desodorisierer (15) lediglich während des Röstschritts betrieben und beim Umschalten zum Kühlschritt angehalten wird.

3. Verfahren nach Anspruch 1 oder 2, wobei die zirkulierende Luft auf -18°C gekühlt wird.

4. Vorrichtung zum Rösten und Kühlen von Bohnen, aufweisend:
einen Röster (50) zum Rösten der Bohnen, mit einer Einrichtung zum Ablassen von Röstabgas durch einen Staubabscheider, einen Filter und einen Desodorisierer an die äußere Atmosphäre, und
eine Kühlvorrichtung (10) zum Kühlen der gerösteten Bohnen, die einen Kühlkessel (14), einen Kaltlufterzeuger (11) und einen geschlossenen Zirkulierweg (13) zur Zirkulation kalter Luft durch den Kühlkessel und den Kaltlufterzeuger in einem geschlossenen Kreislauf aufweist, wobei der Kaltlufterzeuger eine Kondensatoreinheit (11a) und einen Wärmetauscher (11b) zum Kühlen der zirkulierenden Luft auf 10°C oder weniger aufweist.

5. Vorrichtung nach Anspruch 4, wobei der Desodorisierer (15) lediglich während des Betriebs des Rösters betrieben wird und angehalten wird, wenn der Betrieb der Kühlvorrichtung (10) zum Kühlen der gerösteten Bohnen beginnt, und
wobei die Kühlvorrichtung (10) einen Staubabscheider (12) aufweist, der mittels des Zirkulationswegs (13) in dem geschlossenen Kreislauf enthalten ist, um Staub aus der zirkulierenden kalten Luft zu sammeln.

6. Vorrichtung nach Anspruch 4 oder 5, wobei der Kaltlufterzeuger zum Kühlen der zirkulierenden Luft auf -18°C eingerichtet ist.

## Revendications

1. Procédé de torréfaction et de refroidissement de fèves, comprenant les étapes suivantes consistant à :
torréfier les fèves, étape dans laquelle un gaz d'échappement de torréfaction est libéré dans l'atmosphère extérieure à travers un collecteur de poussière, un filtre et un désodoriseur, et
refroidir rapidement les fèves torréfiées isolées de l'atmosphère extérieure en faisant circuler de l'air froid dans un circuit fermé comprenant un générateur d'air froid composé d'un groupe compresseur-condenseur (11a) et d'un échangeur de chaleur (11b) pour refroidir l'air mis en circulation à une température de 10°C ou inférieure, ce qui permet de supprimer la dispersion d'arôme et d'empêcher la décharge dans l'atmosphère de gaz contenant des composants aromatiques, produits lors du refroidissement.

2. Procédé selon la revendication 1, dans lequel le désodoriseur (15) n'est mis en marche que lors de l'étape de torréfaction et est arrêté lors du passage à l'étape de refroidissement.

3. Procédé selon la revendication 1 ou 2, dans lequel ledit air mis en circulation est refroidi à -18°C.

4. Appareil de torréfaction et de refroidissement de fèves, comprenant :
un torréfacteur (50) pour torréfier les fèves avec des moyens pour libérer le gaz d'échappement de torréfaction dans l'atmosphère extérieure à travers un collecteur de poussière, un filtre et un désodoriseur, et
un appareil de refroidissement (10) pour refroidir les fèves torréfiées, comprenant une cuve de refroidissement (14), un générateur d'air froid (11) et un conduit de circulation fermé (13) pour faire circuler de l'air froid dans la cuve de refroidissement et le générateur d'air froid dans un circuit fermé, dans lequel le générateur d'air froid comprend un groupe compresseur-condenseur (11a) et un échangeur de chaleur (11b) pour refroidir l'air mis en circulation à une température de 10°C ou inférieure.

5. Appareil selon la revendication 4, dans lequel le désodoriseur (15) n'est mis en marche que lorsque le torréfacteur fonctionne et est arrêté lorsque l'appareil de refroidissement (10) est mis en marche pour refroidir les fèves torréfiées, et
dans lequel l'appareil de refroidissement (10) comprend un collecteur de poussière (12) à l'intérieur dudit conduit de circulation (13) dans ledit circuit fermé pour collecter la poussière à partir de l'air froid mis en circulation.

6. Appareil selon la revendication 4 ou 5, dans lequel ledit générateur d'air froid est prévu pour refroidir l'air mis en circulation à -18°C.
